# EUROPÄISCHE PATENTSCHRIFT

(11) **EP 1 965 222 B1**
(45) Veröffentlichungstag und Bekanntmachung des Hinweises auf die Patenterteilung: **30.08.2017**
(21) Anmeldenummer: 08400005.8
(22) Anmeldetag: 27.02.2008
(51) Int. Cl.: G01S 13/72, G08G 3/00, G08G 5/00, G01S 13/87

(54) **Verfahren und Vorrichtung zur Verfolgung mindestens eines sich bewegenden Objekts**
Method and device for tracking a minimum of one moving object
Procédé et dispositif destinés à suivre au moins un objet se déplaçant

(30) Priorität: 02.03.2007 DE 102007011604
(43) Veröffentlichungstag der Anmeldung: 03.09.2008
(73) Patentinhaber: IN - Innovative Navigation GmbH, 70806 Kornwestheim (DE)
(72) Erfinder: Zimmermann, Reinhard, 71672 Erdmannhausen (DE); Gern, Thomas, 71686 Remseck (DE); Sandler, Martin, 73732 Esslingen (DE)
(74) Vertreter: Raible Deissler Lehmann Patentanwälte PartG mbB

(56) Entgegenhaltungen:
- US-A1- 2006 238 406
- US-B1- 6 260 759
- FARINA A ET AL: "Constrained tracking filters for A-SMGCS", INFORMATION FUSION, 2003. PROCEEDINGS OF THE SIXTH INTERNATIONAL CONFE RENCE OF JULY 8-11, 2003, PISCATAWAY, NJ, USA,IEEE, Bd. 1, 8. Juli 2003 (2003-07-08), Seiten 414-421, XP010676518,
- CHANG S J: "Development and analysis of ais applications as an efficient tool for vessel traffic service", OCEANS '04. MTTS/IEEE TECHNO-OCEAN '04 KOBE, JAPAN NOV. 9-12, 2004, PISCATAWAY, NJ, USA,IEEE, Bd. 4, 9. November 2004 (2004-11-09), Seiten 2249-2253, XP010776765, DOI: 10.1109/OCEANS.2004.1406499 ISBN: 978-0-7803-8669-3
- PANNETIER B ET AL: "VS-IMM using road map information for a ground target tracking", INFORMATION FUSION, 2005 7TH INTERNATIONAL CONFERENCE ON PHILADELPHIA, PA, USA 25-28 JULY 2005, PISCATAWAY, NJ, USA,IEEE, Bd. 1, 25. Juli 2005 (2005-07-25), Seiten 24-31, XP010892630, DOI: 10.1109/ICIF.2005.1591832 ISBN: 978-0-7803-9286-1

## Beschreibung

Die Erfindung betrifft ein Verfahren und eine Vorrichtung zur Verfolgung mindestens eines sich bewegenden Objekts.

Derartige Vorrichtungen sind z.B. unter den Bezeichnungen Tracker, Radar Extraktor-Tracker oder Multi Sensor Tracker (MST) bekannt und werden u.a. bei der Küstenüberwachung, Flussüberwachung, Hafenüberwachung, Luftraumüberwachung und Rollfeldüberwachung eingesetzt, um den Schiffs- und/oder Flugverkehr/Rollfeldverkehr zu beobachten und ggf. erforderliche Maßnahmen zu ergreifen. Ein MST ist eine Vorrichtung, die in der Lage ist, Messdaten mehrerer Sensoren gemeinsam auszuwerten.

Der Artikel Farina et al., "Constrained tracking filters for A-SMGCS", INFORMATION FUSION, 2003 aus PROCEEDINGS OF THE SIXTH INTERNATIONAL CONFERENCE OF JULY 8-11, 2003, PISCATAWAY, NJ, USA, IEEE, Bd. 1,8. Juli 2003, Seiten 414-421 zeigt einen IMM (Interactive Multiple Model) Tracking-Algorithmus, bei dem in Abhängigkeit von Sensordaten unterschiedliche Modelle parallel berechnet werden, wobei der Track nach vorgegebenen Bedingungen durch ein geeignetes Modell aus der Gruppe der vorhandenen Modelle bestimmt wird, und wobei ein Übergang von einem der Modelle zu einem anderen Modell stattfinden kann. Dabei wird der IMM Tracking-Algorithmus verfeinert, indem abhängig vom Gebiet, in dem sich der Track befindet, nur bestimmte Modelle aktiv sind, die verfügbaren Modelle also abhängig vom Gebiet sind, in dem sich der Track befindet. Die verfeinerte Variante wird im Artikel VS-IMM genannt.

Es ist daher eine Aufgabe der Erfindung, ein neues Verfahren und eine neue Vorrichtung zur Verfolgung mindestens eines sich bewegenden Objekts bereitzustellen.

Diese Aufgabe wird gelöst durch ein Verfahren zur Verfolgung mindestens eines sich bewegenden Objekts mittels mindestens einer Sensorvorrichtung, die dazu ausgebildet ist, Messdaten über dieses mindestens eine Objekt zu generieren, und mit Routenparametern für mindestens eine vorgegebene Route, welches Verfahren die folgenden Schritte aufweist:
A) in Abhängigkeit von den Messdaten wird für das Objekt ein Track als Abbild des Objekts erzeugt und fortlaufend aktualisiert,
B) in Abhängigkeit vom Zustand des Tracks und den Routenparametern wird auf Grund mindestens eines vorgegebenen Kriteriums bestimmt, ob eine Route für den betreffenden Track aktiv ist;
C) wenn eine Route für den Track aktiv ist, wird der Zustand des Tracks in Abhängigkeit von den Routenparametern beeinflusst.

Gemäß einer bevorzugten Ausführungsform sind bei der Bestimmung, ob eine Route für einen Track aktiv ist, mehrere Kriterien vorgegeben, und eine Route für den Track ist nur aktiv, wenn alle vorgegebenen Kriterien erfüllt sind, wobei bevorzugt dann, wenn eine Route für einen Track aktiv ist, in dem Track eine Information über die Aktivität der Route gespeichert wird, wobei bevorzugt die Routenparameter konfigurierbar sind, und wobei bevorzugt beim Vorliegen mehrerer Tracks für jeden Track geprüft wird, ob eine Route für den betreffenden Track aktiv ist.

Gemäß einer bevorzugten Ausführungsform weisen die Routenparameter für die Route eine ortsfeste Kurve auf, wobei bevorzugt die ortsfeste Kurve einer absolut festgelegten, möglichen Fahrbahn des Objekts entspricht.

Gemäß einer bevorzugten Ausführungsform wird die Kurve als Polygon definiert, bevorzugt als offenes Polygon, wobei bevorzugt die einzelnen Punkte des Polygons durch deren geographische Breite und Länge definiert werden.

Gemäß einer bevorzugten Ausführungsform weist die Kurve eine Breite auf, wobei bevorzugt die Breite der Kurve konstant oder abhängig von der Kurvenposition ist.

Gemäß einer bevorzugten Ausführungsform wird der Kurve eine Richtung zugeordnet, wobei bevorzugt die Kurve einen Anfangspunkt und einen Endpunkt hat, und die Richtung vom Anfangspunkt zum Endpunkt hin definiert wird.

Gemäß einer bevorzugten Ausführungsform wird die Kurve (72) als bidirektional definiert.

Gemäß einer bevorzugten Ausführungsform wird bei der Bestimmung, ob eine Route für einen Track aktiv ist, geprüft, ob sich der Track auf der Kurve befindet.

Gemäß einer bevorzugten Ausführungsform wird bei der Bestimmung, ob eine Route für einen Track aktiv ist, geprüft, ob die Winkelabweichung zwischen der Bewegungsrichtung des Tracks und der Richtung der Route an der Position des Tracks innerhalb eines vorgegebenen Höchst-Winkelabweichungsbereichs ist, wobei bevorzugt der Höchst-Winkelabweichungsbereich in Form eines maximalen Abweichungswinkels definiert wird.

Gemäß einer bevorzugten Ausführungsform weisen die Routenparameter für die Route den Höchst-Winkelabweichungsbereich auf, wobei bevorzugt der Höchst-Winkelabweichungsbereich in Form eines maximalen Abweichungswinkels definiert wird.

Gemäß einer bevorzugten Ausführungsform wird dann, wenn eine Route für einen Track aktiv ist, der Zustand des Tracks derart beeinflusst, dass sich der Track entlang der Kurve bewegt, und bevorzugt ist die Genauigkeit für die Beeinflussung des Zustands des Tracks einstellbar.

Gemäß einer bevorzugten Ausführungsform wird der Zustand des Tracks dadurch beeinflusst, dass geeignete Pseudo-Messdaten generiert werden, um die gewünschte Bewegung des Tracks zu erzeugen.

Gemäß einer bevorzugten Ausführungsform weisten die Pseudo-Messdaten Pseudo-Positionsdaten.

Gemäß einer bevorzugten Ausführungsform weisen die Pseudo-Messdaten Pseudo-Geschwindigkeitsdaten für einen Track auf.

Gemäß einer bevorzugten Ausführungsform weisen die Routenparameter für die mindestens eine Route eine Breite auf, und wobei dann, wenn eine Route für einen Track aktiv ist, der Zustand des Tracks derart beeinflusst wird, dass der laterale Abstand des Tracks bezüglich der Kurve konstant bleibt.

Gemäß einer bevorzugten Ausführungsform weisen die Routenparameter für die Route einen Minimalgeschwindigkeitswert auf, und bei der Bestimmung, ob eine Route für einen Track aktiv ist, wird geprüft, ob der Track einen Geschwindigkeitswert hat, welcher mindestens so groß wie der Minimalgeschwindigkeitswert ist.

Gemäß einer bevorzugten Ausführungsform weisen die Routenparameter für die Route einen Maximalgeschwindigkeitswert auf, und bei der Bestimmung, ob eine Route für einen Track aktiv ist, wird geprüft, ob der Track einen Geschwindigkeitswert hat, welcher höchstens so groß wie der Maximalgeschwindigkeitswert ist.

Gemäß einer bevorzugten Ausführungsform wird bei der Bestimmung, ob eine Route für einen Track aktiv ist, geprüft, ob keine aktuellen Messdaten für den Track vorliegen, wobei bevorzugt im Zustand des Tracks gespeichert wird, wann die letzten Messdaten für den Track vorlagen und wann neue Messdaten erwartet werden, und wobei bevorzugt bei der Bestimmung, ob eine Route für einen Track aktiv ist, geprüft wird, ob erwartete neue Messdaten ausgefallen sind.

Gemäß einer bevorzugten Ausführungsform weisen die Routenparameter für die mindestens eine Route einen Geschwindigkeitsbetragswert auf, wobei dann, wenn eine Route für einen Track aktiv ist, der Zustand des Tracks derart beeinflusst wird, dass der Betrag der Geschwindigkeit des Tracks dem Geschwindigkeitsbetragswert der Route entspricht, wobei bevorzugt die Genauigkeit für die Beeinflussung des Zustands des Tracks einstellbar ist, und wobei bevorzugt der Zustand des Tracks derart beeinflusst wird, dass der Betrag der Geschwindigkeit des Tracks solange konstant gehalten wird, wie die Route für den Track aktiv ist.

Gemäß einer bevorzugten Ausführungsform ist dem mindestens einen Track eine vorgegebene Lebensdauer zugeordnet, wobei der Track entfernt wird, wenn die Zeitdauer seit dem Vorliegen des letzten Messwerts für den Track größer als die vorgegebene Lebensdauer wird, wobei bevorzugt der Zustand des Tracks eine Grundlebensdauer aufweist, und wobei bevorzugt die Lebensdauer des Tracks dann, wenn keine Route für den Track aktiv ist, der Grundlebensdauer entspricht.

Gemäß einer bevorzugten Ausführungsform weisen die Routenparameter für die mindestens eine Route eine Routen-Mindestlebensdauer auf, wobei dann, wenn eine Route für einen Track aktiv ist, die Lebensdauer des Tracks auf die Routen-Mindestlebensdauer vergrößert wird, wenn sie zuvor geringer war.

Gemäß einer bevorzugten Ausführungsform weisen die Routenparameter für die mindestens eine Route eine Routen-Mindestlebensstrecke auf, wobei dann, wenn eine Route für einen Track aktiv ist, der Track auch beim Ablauf der Lebensdauer erst dann entfernt wird, wenn die zurückgelegte Strecke des Tracks seit dem Beginn der Aktivität der Route größer als die Routen-Mindestlebensstrecke wird.

Gemäß einer bevorzugten Ausführungsform wird für den Fall, dass bei der Bestimmung, ob eine Route für einen Track aktiv ist, mehrere mögliche Routen für den Track zur Verfügung stehen, nur eine geeignete Route ausgewählt, wobei bevorzugt die Auswahl der geeigneten Route mit Hilfe eines Best-Match-Verfahrens erfolgt.

Gemäß einer bevorzugten Ausführungsform ist mindestens eine Anzeigevorrichtung zur Darstellung eines Bereichs des von der Sensorvorrichtung erfassten Raums vorgesehen, und ein Track, welcher sich in dem Bereich befindet, wird graphisch dargestellt, wobei bevorzugt der Bereich auf der Anzeigevorrichtung in der Draufsicht dargestellt wird, und wobei bevorzugt die Geschwindigkeit des Tracks ermittelt und auf der Anzeigevorrichtung dargestellt wird, wobei bevorzugt ein Track, für den eine Route aktiv ist, in besonderer Weise auf der Anzeigevorrichtung dargestellt wird, und wobei bevorzugt die mindestens eine Route auf der Anzeigevorrichtung dargestellt wird.

Gemäß einer bevorzugten Ausführungsform ist das Objekt ein Schiff.

Die Erfindung wird gelöst durch eine Vorrichtung zur Verfolgung mindestens eines sich bewegenden Objekts, welche aufweist: Mindestens einen Rechner, mindestens einen Speicher zur Speicherung von Routenparametern für mindestens eine vorgegebene Route, mindestens eine Eingabeschnittstelle, um Messdaten über das mindestens eine sich bewegende Objekt von mindestens einer Sensorvorrichtung zu empfangen, welche Vorrichtung dazu ausgebildet ist, ein Verfahren mit den folgenden Schritten auszuführen:
A) in Abhängigkeit von den Messdaten wird für das Objekt ein Track als Abbild des Objekts erzeugt und fortlaufend aktualisiert,
B) in Abhängigkeit vom Zustand des Tracks und den Routenparametern wird auf Grund mindestens eines vorgegebenen Kriteriums bestimmt, ob eine Route für den betreffenden Track aktiv ist;
C) wenn eine Route für den Track aktiv ist, wird der Zustand des Tracks in Abhängigkeit von den Routenparametern beeinflusst, wobei der Vorrichtung bevorzugt mindestens eine Sensorvorrichtung zur Generierung der Messdaten zugeordnet ist, wobei die Vorrichtung bevorzugt mindestens eine Ausgabeschnittstelle aufweist, um mindestens einen Track auszugeben, und wobei der Vorrichtung bevorzugt mindestens eine Arbeitsstation zugeordnet ist, welche mit der mindestens einen Ausgabeschnittstelle verbunden ist.

Weitere Einzelheiten und vorteilhafte Weiterbildungen der Erfindung ergeben sich aus den im folgenden beschriebenen und in den Zeichnungen dargestellten, in keiner Weise als Einschränkung der Erfindung zu verstehenden Ausführungsbeispielen, sowie aus den Unteransprüchen. Es zeigt:
- Fig. 1: eine Übersichtsdarstellung über ein erfindungsgemäßes System,
- Fig. 2: eine schematische Darstellung einer Anwendung einer Route,
- Fig. 3: eine schematische Darstellung einer unidirektionalen Route und deren Aktivitätskriterien
- Fig. 4: eine schematische Darstellung einer bidirektionalen Route und deren Aktivitätskriterien
- Fig. 5: eine schematische Darstellung einer Aktion einer Route,
- Fig. 6: eine schematische Darstellung einer weiteren Aktion einer Route,
- Fig. 7: ein Anwendungsbeispiel für eine Route, und
- Fig. 8: ein Anwendungsbeispiel für zwei Routen.

Gleiche oder gleich wirkende Teile erhalten die gleichen Bezugszeichen und werden üblicherweise nur einmal beschrieben.

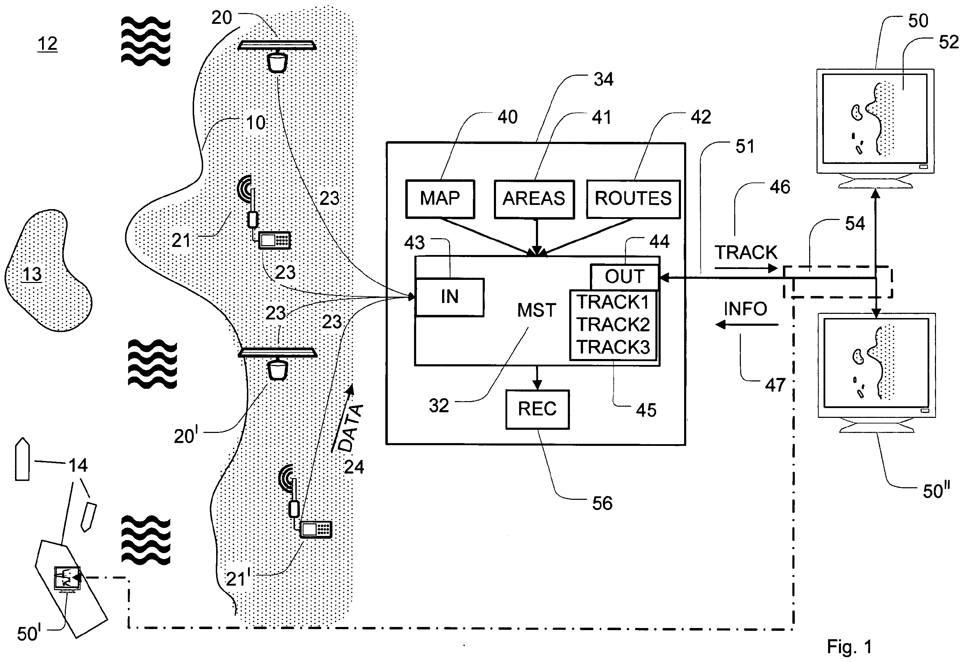

**Fig. 1** zeigt eine Küstenlinie 10, ein Meer 12, eine Insel 13 und drei sich auf dem Meer 12 bewegende Schiffe 14. An der Küste sind eine Mehrzahl von Sensorvorrichtungen 20, 20', 21 und 21' zur Erzeugung von Messdaten "DATA" 24 über die sich im Meer 12 bewegenden Schiffe 14 angeordnet, wobei die Sensorvorrichtungen 20, 20' Radar-Sensorvorrichtungen und die Sensorvorrichtungen 21, 21' AIS-Sensorvorrichtungen sind (AIS = Automatic Identification System, bei dem die Schiffe ihre Kennung senden und sich damit identifizieren). Es sind auch alle anderen Arten von Sensorvorrichtungen möglich. Die Sensorvorrichtungen 20, 20', 21 und 21' können bereits eine Vorverarbeitung der Messdaten durchführen, und die ggf. vorverarbeiteten Messdaten "DATA" 24 werden über Datenleitungen 23 oder ein Funknetz einer Eingabeschnittstelle "IN" 43 eines Multi Sensor Trackers (MST) 32 zugeführt, der sich z.B. in einem Rechenzentrum 34 befindet.

Dem MST 32 steht neben den Messdaten der Sensorvorrichtungen 20, 21 auch so genanntes a priori-Wissen zur Verfügung, wobei in diesem Beispiel Karteninformationen "MAP" 40, Gebietsinformationen "AREAS" 41 und Routeninformationen "ROUTES" 42 dargestellt sind.

Der MST 32 verarbeitet die von den Sensorvorrichtungen 20, 21 eingehenden Messdaten unter Zuhilfenahme des a priori-Wissens und erzeugt daraus so genannte Tracks. Tracks sind Abbilder im MST 32 vom Zustand der realen Schiffe 14.

Ein Track für ein Schiff 14 umfasst z.B. die folgende Information:
- Position, z.B. Lat = 47° 25,1034' N, Lon = 10° 59,6543' E (N = Nord und geographische Breite, E = Ost und geographische Länge, z.B. jeweils auf vier Nachkommastellen bei den Minuten)
- Geschwindigkeit, z.B. 10,5 Knoten
- Kurs, z.B. 133°
- Drehgeschwindigkeit, z.B. 0.01 °/s
- Name, z.B. "MS ISABEL"
- Zeitdauer der bisherigen Verfolgung, z.B. 44 min
- Zeitpunkt der letzten Messung, z.B. 2007-03-01, 16:41:43 Uhr
- Verbleibende Lebensdauer bei vollständigem Messdatenausfall, z.B. 45 s
- Eindeutige Track-Identifikationsnummer (unique track identifier)

Die Bewegungsdaten des Tracks (von Position bis Drehgeschwindigkeit) werden auch als Zustandsvektor bezeichnet und die Gesamtheit der Trackdaten als Zustand des Tracks.

Im MST 32 sind drei Tracks 45 für die drei Schiffe 14 gezeigt, und die vom MST 32 ermittelten Tracks 45 werden dann z.B. über eine Ausgabeschnittstelle 44 und eine Datenleitung 51 oder aber auch zum Teil drahtlos als Daten "TRACK" 46 an Arbeitsstationen 50, 50', 50" übermittelt. Dort werden diese ggf. auf Anzeigevorrichtungen 52 (Monitor etc.) angezeigt, um z.B. eine Küstenüberwachung zu ermöglichen.

Obwohl der Begriff Objekt eigentlich das reale Objekt wie z.B. ein auf einem Fluss schwimmendes Schiff bezeichnet, und der Begriff Track eine Abbildung des Objekts im System bezeichnet, werden die Begriffe wie in der folgenden Beschreibung auch häufig synonym verwendet, da man die Verfolgung der Objekte im MST 32 üblicherweise im Zusammenhang mit der Bewegung der realen Objekte erläutert.

Bei großen Systemen kann ein weiteres Zwischensystem 54 vorgesehen werden, das einen Datenaustausch zwischen den Stationen 50, 50', 50" ermöglicht. So kann z.B. ein Benutzer der Arbeitsstation 50 ein Schiff 14 bzw. dessen Track 45, 46 als möglichen Schmuggler kennzeichnen, und auf einer auf einem Küstenüberwachungsboot angeordneten Arbeitsstation 50' wird diese Kennzeichnung mit Hilfe des Zwischensystems 54 ebenfalls angezeigt.

Es kann auch vorgesehen werden, dass z.B. ein Anwender der Arbeitsstation 50 über die Datenleitung 51 Daten "INFO" 47 wie z.B. einen per Funk erhaltenen Schiffsnamen an den MST 32 sendet. Dem MST 32 kann auch eine Aufzeichnungsvorrichtung "REC" 56 zugeordnet werden, um z.B. den Schiffsverkehr vor einem eingetroffenen Unglück überprüfen zu können oder statistische Auswertungen durchzuführen.

### Arbeitsweise

Der MST 32 ist ein sehr komplexes System, da er z.B. berücksichtigen muss, dass sich die von den Sensorvorrichtungen 20, 21 gemessenen Bereiche teilweise überlappen, die Messdaten der einzelnen Sensorvorrichtungen 20, 21 in größeren Abständen und zum Teil verspätet eintreffen und nicht alle Bereiche durch die Sensorvorrichtungen 20, 21 erfasst werden. Der MST 32 soll trotz dieser Schwierigkeiten Tracks 45 erzeugen, deren Zustand einschließlich Zustandsvektor möglichst gut mit dem tatsächlichen Zustand der Schiffe 14 übereinstimmt und möglichst wenig Fehler enthält.

### a priori-Wissen - Allgemein

Das a priori-Wissen erleichtert dem MST 32 die Verfolgung der Schiffe bzw. allgemein der Objekte wesentlich.

Bei den Gebietsinformationen "AREAS" 41 kann z.B. definiert werden, in welchem Bereich des überwachten Gebiets Land ist (so genannte land areas), und dementsprechend kann die Verfolgung eines Tracks 45 beendet werden, wenn sich dieses in ein solches Landgebiet bewegt, da es sich entweder nicht um ein Schiff handelt oder aber entsprechende Messfehler vorliegen. Es kann z.B. auch definiert werden, dass in bestimmten Gebieten, in denen z.B. ein großes Störrauschen auftritt, keine neuen Tracks erzeugt werden (so genannte non automatic inititation areas), oder dass in bestimmten Gebieten Tracks nicht entfernt werden (cancellation control areas).
Die Karteninformationen "MAP" 40 geben dem MST 32 weitere Informationen über das zu überwachende Gebiet, und der MST 32 kann z.B. aus den Karteninformationen 40 automatisch Gebietsinformationen "AREAS" 41 generieren. Die Karteninformationen werden auch an den Arbeitsstationen 50, 50', 50" zur Kontrolle und Arbeitserleichterung verwendet, indem sie dort den Objekten und Gebietsinformationen "AREAS" 41 überlagert werden.

### a priori-Wissen - Routen

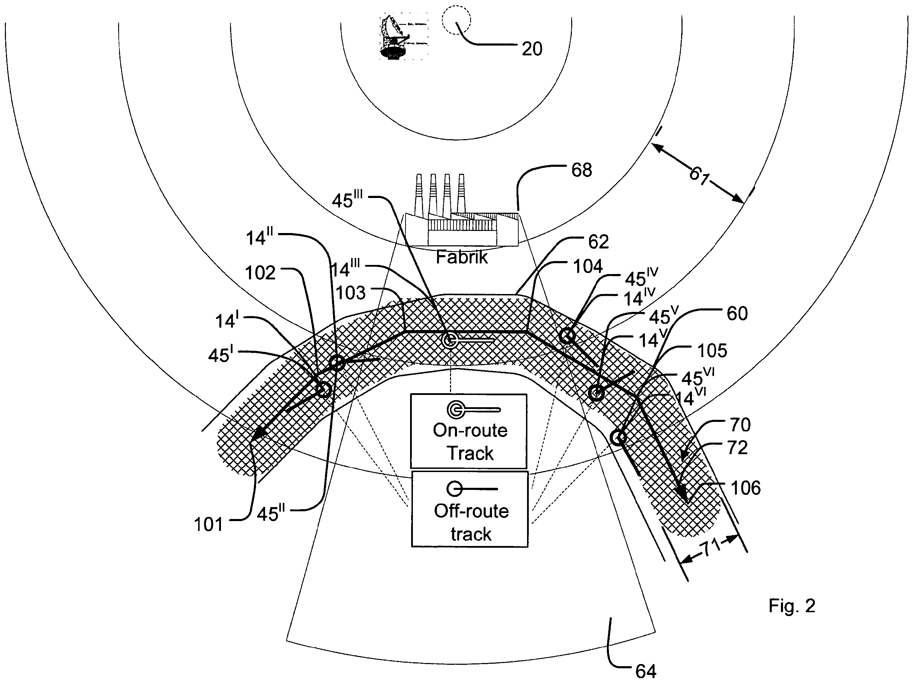

**Fig. 2** zeigt ein Anwendungsbeispiel für die Routeninformationen "ROUTES" 42 für den Fall einer Hafenüberwachung. Dargestellt sind sowohl die realen Gegebenheiten als auch das entsprechende Abbild im MST 32. Die Radar-Sensorvorrichtung 20 ist zur Überwachung des Kanals 60 angeordnet. Es handelt sich um einen drehbaren Richtstrahler/Empfänger, der währen eines Umlaufs den durch konzentrische Kreise angedeuteten Bereich 61 abtastet. Ein Bereich 62 des Kanals 60 ist im Radarschatten 64 einer Fabrik 68, d.h., auf Grund der Größe der Fabrik 68 ist eine Messung im Bereich 62 durch die Radar-Sensorvorrichtung 20 nicht möglich, da die von der Radar-Sensorvorrichtung ausgestrahlten Radarstrahlen durch die Fabrik 68 vollständig reflektiert oder absorbiert werden. Auf dem Kanal 60 sind sechs Schiffe 14' bis 14^{VI} dargestellt. Das Schiff 14" bewegt sich gerade auf den Bereich 62 zu, und in diesem Bereich 62 werden keine Messdaten mehr zu dem Schiff 14" erzeugt. Als Überlagerung dargestellt ist das MST-interne Abbild mit sechs Tracks 45' bis 45^{VI} und zugehörigen Geschwindigkeitsanzeigen, wobei die Tracks 45' bis 45^{VI} den Schiffen 14' bis 14^{VI} entsprechen, und eine Route 70, welche der Fahrstraße im Kanal 60 entspricht. Die Route 70 ist in Form eines Polygons definiert und dargestellt, und der Route 70 ist eine Breite (bezüglich der longitudinalen Routenposition laterale Ausdehnung) 71 zugeordnet.

Der MST 32 kann z.B. dann, wenn bei einem Eintritt eines Schiffs 14 in den Radarschattenbereich 64 für den entsprechenden Track 45 keine Messdaten mehr vorliegen, annehmen, dass das Schiff mit gleich bleibender Geschwindigkeit in die gleiche Richtung weiter fährt. Dies kann jedoch dazu führen, dass sich z.B. der Track 45" des Schiffs 14" im MST 32 in einen als Landgebiet definierten Bereich hineinbewegt und daher aus der Liste der Tracks 45 zu den verfolgten Schiffen 14 entfernt wird, oder aber der Zustand des Tracks zum Schiff 14" hat sich durch die ungenaue Annahme einer geradlinigen Bewegung soweit von der wahren Position des Schiffs entfernt, dass nach dem Verlassen des Bereichs 62 keine Zuordnung der Messungen zu dem entsprechenden Track 45 möglich ist und ggf. fälschlicherweise ein neuer Track 45 erzeugt wird.

In dem Kanal 60 ist die Fahrstraße der Schiffe jedoch weitgehend vorgegeben, und daher ist die Route 70 so definiert, dass sie in etwa der Fahrstraße im Radarschattenbereich 64 entspricht.

Der MST 32 kann nun für den Fall, dass für einen Track keine aktuellen Messdaten vorliegen, überprüfen, ob sich der Track auf der Route 70 befindet. Ist dies der Fall, so kann der MST 32 den Track unter Zuhilfenahme der Routenparameter entlang der Route 70 weiterbewegen, wie dies z.B. beim Track 45''' zum Schiff 14''' dargestellt ist. Für den Track 45''' des Schiffs 14''' ist die Route 70 aktiv, und der Track 45''' wird daher entlang der Route 70 weiterbewegt, obwohl keine aktuellen Messdaten für das Schiff 14''' vorliegen. Bei einer Krümmung der Route 70 führt der Track 45 somit ebenfalls eine Bewegung mit einer Krümmung durch, d.h., die Wirkung der Route ist hier abhängig von der Position des Tracks relativ zur Route.

Durch die Verwendung der Route 70 wird die Verfolgung der Schiffe 14' bis 14""" deutlich verbessert. Die Extrapolation der Bewegung der Tracks wird genauer, und deren Stabilität und mögliche Dynamik wird erhöht.

Die Verwendung der Routen 70 kann in zwei Schritte untergliedert werden. Als erstes wird auf Grund vorgegebener Kriterien bestimmt, ob eine Route 70 für einen Track aktiv ist. Falls ja, wird in einem zweiten Schritt der Zustand des Tracks in Abhängigkeit von den Routenparametern beeinflusst, um so die Verfolgung des Schiffs zu unterstützen.

Routen sind im MST 32 in Form von Routenparametern gespeichert. Die Routenparameter enthalten:
- eine Kurve, z.B. in Form eines offenen, ortsfesten Polygons (auch als Polylinie, Polygonzug oder Multisegmentlinie bekannt), einer Spline-Kurve oder irgendeiner anderen Form einer Kurve. Der Kurve kann auch eine Breite zugeordnet werden.
- Aktivitätskriterien
- Aktionen für den Fall, dass die entsprechende Kurve aktiv ist.
Die Routenparameter sind für jede Route definierbar, z.B. über eine Konfigurationsdatei oder eine graphische Benutzerschnittstelle.

### Route - Kurve

Die Kurve kann auf verschiedene Arten definiert werden, wobei ein offenes Polygon auf Grund der einfachen Berechnungen weniger Rechenleistung benötigt als z.B. eine Spline-Kurve. Die Kurve 72 entspricht in Fig. 2 einer ortsfesten, realen Fahrstraße durch den Kanal 60 für die Schiffe 14, wobei die Kurve sechs Polygonpunkte 101 bis 106 aufweist, von denen z.B. der Punkt 101 durch die Koordinaten Lat = 47° 25,0100' N, Lon = 10° 59,6510' E bzw. durch einen ortsfesten Punkt im internen Koordinatensystem des MST 32 definiert ist. Die Kurve kann auch aus mehreren aneinanderhängenden Teilkurven zusammengesetzt sein und verschiedene Krümmungen aufweisen. Die Route 70 kann somit auch als ortsfest bezeichnet werden. Durch die Kurve werden eine oder zwei vorgegebene Richtungen entlang der Kurve definiert.

### Route - Aktivitätskriterien

Als Aktivitätskriterien (bzw. Wirkkriterien, engl.: scope) enthalten die Routen z.B. die folgenden Informationen:
- Routenfamilien-Index zur Klassifizierung der Routen, um z.B. das Auffinden von ähnlichen Routen zu erleichtern.
- Routen-Index, der die Route eindeutig identifiziert.
- Laterale Breite: Die laterale Breite der Route kann angegeben werden, und sie gilt dann z.B. auf beiden Seiten der Kurve. Falls eine laterale Breite angegeben ist, wird z.B. als Kriterium geprüft, ob sich der Track im durch die laterale Breite definierten Bereich der Route befindet bzw., ob der nächste Abstand (das Lot) des Tracks 45 zur Kurve 71 kleiner als die laterale Breite ist. Die Breite kann dabei z.B. konstant oder abhängig von dem longitudinalen Abschnitt nicht konstant angegeben werden.
- Minimalgeschwindigkeit: Falls eine Minimalgeschwindigkeit angegeben ist, wird z.B. als Kriterium geprüft, ob der Track einen Geschwindigkeitswert hat, welcher mindestens so groß wie die Minimalgeschwindigkeit der Route ist. Hierdurch wird die Route nicht für sehr langsame bzw. stehende Tracks/Objekte angewandt. Es kann aber z.B. auch geprüft werden, ob der vektorielle Anteil der Geschwindigkeit in Richtung der Routenrichtung an der Position des Tracks mindestens so groß wie die Minimalgeschwindigkeit ist.
- Maximalgeschwindigkeit: Falls eine Maximalgeschwindigkeit angegeben ist, wird z.B. als Kriterium geprüft, ob der Track bzw. das Objekt einen Geschwindigkeitswert hat, welcher höchstens so groß wie die Maximalgeschwindigkeit der Route ist. Hierdurch wird eine Route nicht für sehr schnelle Tracks/Objekte angewandt, da es sich z.B. nicht um Schiffe handelt. Es kann alternativ z.B. auch geprüft werden, ob der vektorielle Anteil der Geschwindigkeit in Richtung der Routenrichtung an der Position des Tracks mindestens so groß wie die Minimalgeschwindigkeit ist.
- Höchst-Winkelabweichung: Falls eine Höchst-Winkelabweichung angegeben ist, wird z.B. als Kriterium geprüft, ob die Winkelabweichung zwischen der Bewegungsrichtung des Tracks und der Richtung der Route an der Position des Tracks kleiner als die Höchst-Winkelabweichung ist.
- Bidirektionalität: Falls für die Kurve angegeben ist, dass sie bidirektional ist, wird sie in beide Richtungen der Kurve (vom Anfangspunkt 101 zum Endpunkt 106 hin und umgekehrt) verwendet. Ansonsten wird sie unidirektional verwendet, z.B. nur vom Anfangspunkt 101 zum Endpunkt 106 hin.
- "Keine aktuellen Messdaten vorhanden": Falls dies definiert ist, wird als zusätzliches Kriterium geprüft, ob zu dem Track keine aktuellen Messdaten vorliegen. Die Route wird also nur angewandt, wenn über das Objekt bzw. für den Track keine aktuellen Messdaten vorliegen, weil sich das Objekt z.B. in einem Radarschatten befindet. Dass keine aktuellen Messdaten vorliegen, wird z.B. daraus gefolgert, dass erwartete neue Messdaten ausgefallen sind oder aktuelle Messdaten vorliegen, die aber keine Information über das Objekt bzw. den Track enthalten.

Durch die in den Routenparametern enthaltene Kurve sind also insbesondere auch Aktivitätskriterien möglich, die abhängig sind von den Eigenschaften der Kurve an der Position des Tracks, und/oder auch von der Position des Tracks relativ zur Kurve und/oder der vektoriellen Geschwindigkeit des Tracks in Beziehung zur Richtung der Kurve an der Position des Tracks. Insbesondere die folgenden Aktivitätskriterien können abhängig von der Implementierung solche Abhängigkeiten aufweisen: "Laterale Breite", "Minimalgeschwindigkeit", "Maximalgeschwindigkeit" und "Höchst-Winkelbereich", welche wiederum abhängig sind von dem Aktivitätskriterium "Bidirektionalität". Eine Möglichkeit der Ermittlung der Kurve an der Position des Tracks besteht darin, dass man das Lot von dem Track auf die Kurve bildet und den sich daraus ergebenden Kurvenpunkt auswählt. Hierfür ist es vorteilhaft, wenn die Kurve keine spitzen Winkel aufweist.

Eine entsprechende Vorgehensweise ist bei Bereichen ("AREAS") nicht möglich.

Sofern für die Aktivität einer Route mehrere Kriterien definiert sind, wird eine Route z.B. nur dann aktiv, wenn sämtliche Kriterien erfüllt sind (logische UND-Verknüpfung).

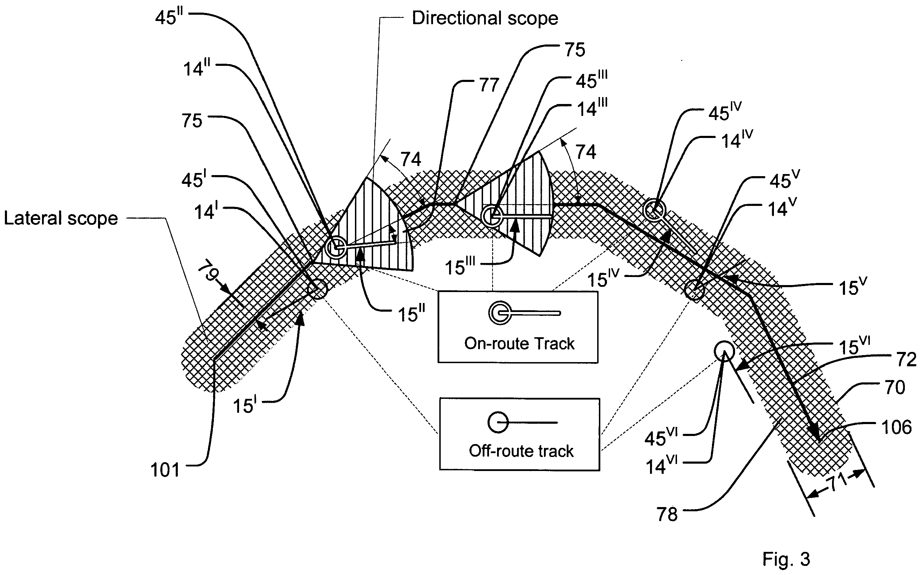

Fig. 3 zeigt eine Route 70 mit einer unidirektionalen Kurve 72 und einer Breite 71, welche sich aus der zweifachen lateralen Breite 79 ergibt. Die Höchst-Winkelabweichung 74 ist an zwei Stellen 75 und 76 jeweils nach links und nach rechts von der durch die Kurve 72 örtlich vorgegebene Richtung eingezeichnet.

Sechs Tracks 45' bis 45^{VI} sind mit zugehörigen Geschwindigkeitsanzeigestrichen 15' bis 15^{VI} dargestellt, und sie entsprechen den Schiffen 14' bis 14^{VI}.

Das Kriterium "Höchst-Winkelabweichung" ist zu diesem Zeitpunkt z.B. von den Tracks 45", 45''' und 45^{IV} erfüllt, da deren Winkelabweichung zwischen der durch die an den Tracks 45 angezeigten Bewegungsrichtung 15 und der Richtung der Route 70 kleiner als die Höchst-Winkelabweichung ist, vgl. z.B. Winkelabweichung 77 des Tracks 45". Der Track 45' erfüllt dieses Kriterium dagegen nicht, da es sich um eine unidirektionale Route 70 handelt und der Track 45' bzw. das Schiff 14' sich in die Gegenrichtung bewegt. Damit ist die Winkelabweichung zu groß.

Das Kriterium "Laterale Breite" der Route wird durch den Track 45^{VI} nicht erfüllt, da sich dieser außerhalb der Route 70 befindet. Die übrigen Tracks (Schiffe) erfüllen das Kriterium.

Sofern die beiden genannten Kriterien gesetzt sind, wird die Route also für die Tracks 45", 45''' und 45^{IV} aktiv, und diese Tracks werden entsprechend mit einem hellen Kreis und einer hellen Geschwindigkeitsanzeige hervorgehoben. Die übrigen Tracks erfüllen zumindest eines der genannten Kriterien nicht, und sie werden daher dunkel angezeigt.

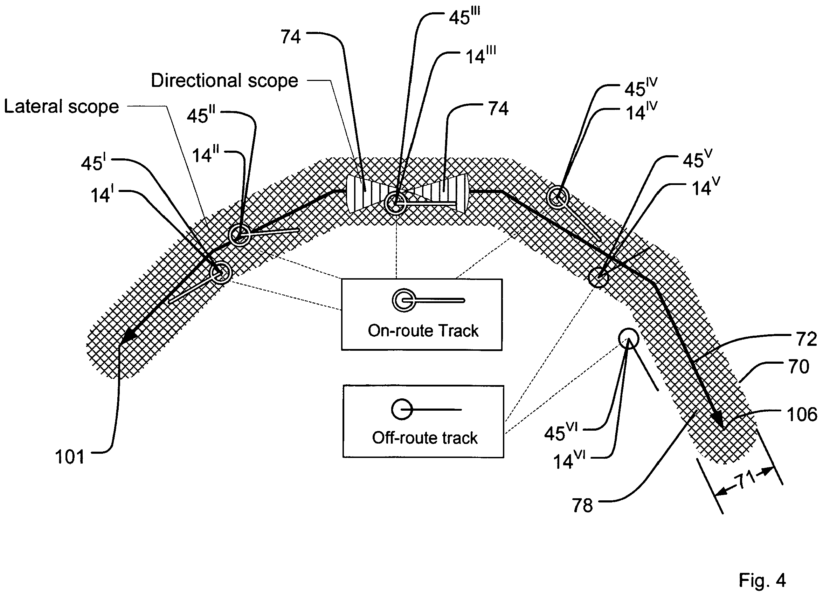

**Fig. 4** zeigt eine Route 70 und Tracks (Schiffe) 14' bis 14^{VI} entsprechend Fig. 3. Im Gegensatz zur Fig. 3 ist die Kurve 72 jedoch als bidirektional definiert. Dies hat zur Folge, dass die Höchst-Winkelabweichung 74 in beide Richtungen der Kurve 72 angewandt wird. Hierdurch erfüllt der Track 45', der sich im Wesentlichen auf der Route 72 von rechts nach links bewegt, das Kriterium der Höchst-Winkelabweichung, und da er auch das Kriterium "Laterale Breite" erfüllt, ist die Route für den Track 45' aktiv, und er ist hell dargestellt.

**Fig. 2** zeigt zusätzlich die Anwendung des Kriteriums "Keine aktuellen Messdaten vorhanden". Außerhalb des Schattenbereichs 64 liefert die Sensorvorrichtung 20 Messdaten, und daher ist das Kriterium "Keine aktuellen Messdaten vorhanden" für die Tracks 45', 45" und 45^{IV} bis 45^{VI} nicht erfüllt. Diese Tracks werden daher dunkel dargestellt, und die Route 70 ist nicht aktiv. Für den Track 45''' ist die Route 70 dagegen aktiv, und er wird hell dargestellt.

### Route - Aktionen

Mögliche Aktionen bei einer Aktivität einer Route werden z.B. durch die folgenden konfigurierbaren Routenparameter beeinflusst:
- Position anpassen ("update_position"): Falls eingeschaltet, wird der Zustand des Objekts derart beeinflusst, dass es sich entlang der Kurve bewegt.
- Lateralen Abstand beibehalten ("keep_lateral_distance"): Falls eingeschaltet, wird der Zustand des Objekts derart beeinflusst, dass der laterale Abstand des Objekts zur Kurve bei einer Bewegung des Objekts entlang der Kurve konstant bleibt.
- Geschwindigkeit vorgeben ("update_speed"): Falls eine Geschwindigkeit vorgegeben ist, wird die Längsgeschwindigkeit (bzw. der Betrag der Geschwindigkeit) des Tracks auf die vorgegebene Geschwindigkeit gesetzt. Dies ist z.B. vorteilhaft in Kanälen, in denen eine Höchstgeschwindigkeit von z.B. 8 Knoten vorgegeben ist, da fast alle Schiffe eine solche Höchstgeschwindigkeit einhalten werden. Diese Aktion kann z.B. auch gemeinsam mit der Aktion "Position anpassen" durchgeführt werden, um das Verfolgen eines Objekts über längere Zeit genauer zu machen.
- Geschwindigkeit beibehalten ("keep_speed"): Falls eingeschaltet, wird bei einer Aktivität einer Route die zuletzt ermittelte Geschwindigkeit des Tracks beibehalten.
- Mindestlebensdauer ("keep_alive_time"): Falls eine Mindestlebensdauer vorgegeben ist, wird die Lebensdauer des Tracks, welche z.B. abhängig von dem Zeitpunkt der letzten Messung und der gesamten Objektlebensdauer ist, auf die Mindestlebensdauer erhöht, falls sie niedriger ist. Dies kann z.B. verhindern, dass ein Track bei der Durchfahrt durch einen größeren Bereich ohne Messwerte nicht wegen des langen Fehlens von Messwerten für den Track bzw. das Objekt entfernt wird.
- Mindestlebensstrecke ("keep_alive_distance"): Falls eine Mindestlebensstrecke gesetzt ist, wird ein Track frühestens dann entfernt, wenn die zurückgelegte Strecke des Tracks seit dem Beginn der Aktivität der Route größer als die Mindestlebensstrecke ist.
- Track kennzeichnen: Falls eingeschaltet, wird im Track gespeichert, falls eine Route aktiv ist und/oder welche der Aktivitätskriterien erfüllt sind, und der Track wird mit diesen Informationen über die Ausgabeschnittstelle "OUT" 44 ausgegeben. Diese Informationen können z.B. in den Arbeitsstationen 50 zur Klassifizierung verwendet werden, indem z.B. Routen für unverdächtige Schiffsbewegungen oder für bekannte Schmugglerrouten definiert werden.

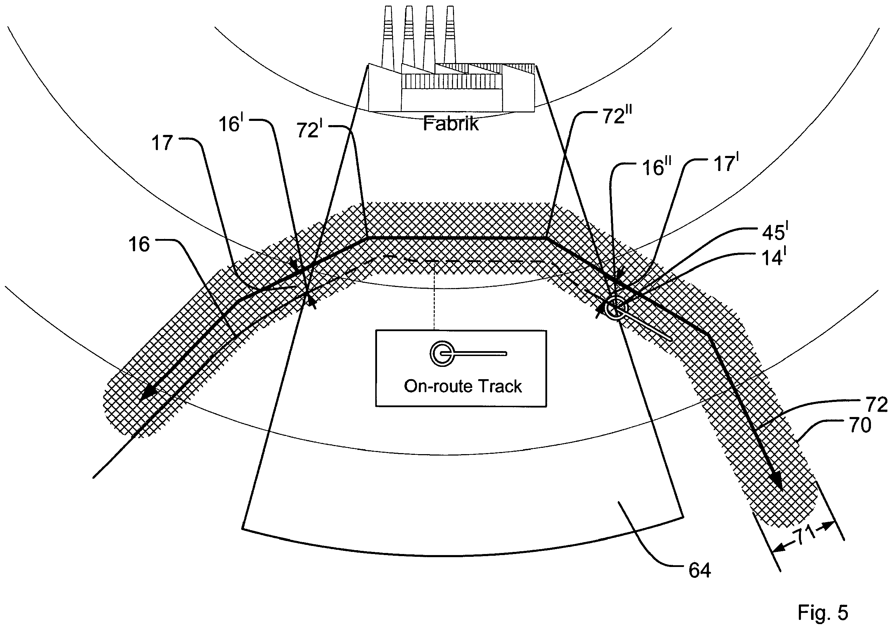

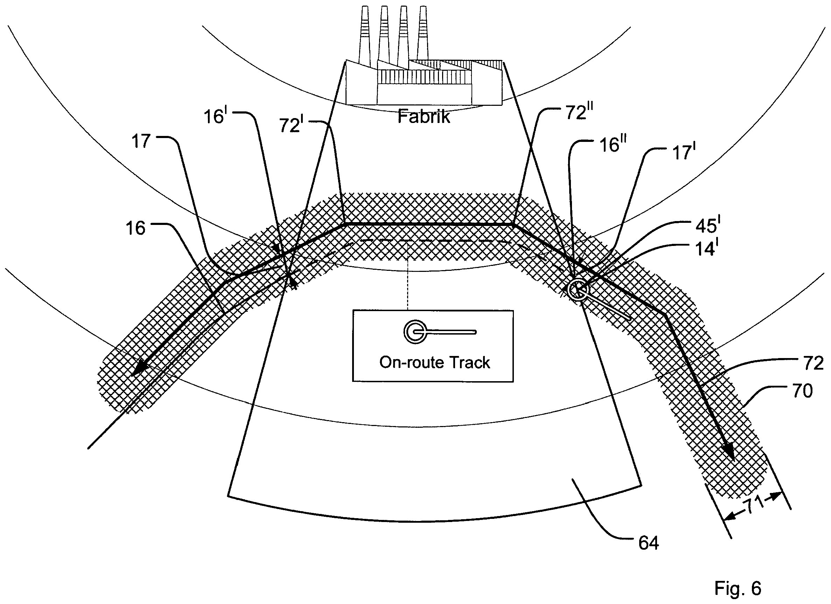

Eine Beeinflussung der Bewegung bzw. des Zustands des Tracks kann z.B. dadurch erfolgen, dass der MST 32 für die gewünschte Bewegung geeignete Pseudo-Messdaten generiert und der Messdatenverarbeitung zuführt. Es handelt sich dabei nicht um echte Messdaten einer Sensorvorrichtung, sondern um künstlich erzeugte Messdaten zum Erreichen der gewünschten Bewegung des Tracks. Die Aktion "Lateralen Abstand beibehalten" kann z.B. dadurch verwirklicht werden, dass dem System 32 anstelle einer nicht vorhandenen Radar-Positionsmessung eine Pseudo-Position des entsprechenden Schiffs vorgegeben wird, die der gewünschten Bahn entlang der Route folgt, vgl. Fig. 5. Bei der Aktion "Position anpassen", bei der die Position des Schiffs der Route folgen soll, kann dagegen z.B. die vektorielle Geschwindigkeit des Tracks jeweils in die lokale Richtung der Kurve gesetzt werden, vgl. Fig. 6.

Auch bei den Aktionen hat eine Route somit erhebliche Vorteile, da die Aktionen für die Tracks abhängig von der bezüglich der Position des Tracks lokalen Eigenschaft der Kurve ausgeführt werden können, insbesondere bei den Aktionen "Position anpassen" und "Lateralen Abstand beibehalten". Die Wirkung der Route ist somit örtlich abhängig.

Die Genauigkeit des lateralen Abstands, der longitudinalen Bewegung und der Einhaltung der Geschwindigkeit kann ebenfalls vorgegeben bzw. konfiguriert werden, z.B. in Form der Standardabweichung.

**Fig. 5** zeigt den zeitlichen Trackverlauf 16 eines Tracks 45' für ein sich durch einen Radarschattenbereich 64 bewegenden Schiffs 14', wobei das Aktivitätskriterium "Keine aktuellen Messdaten vorhanden" eingeschaltet ist. An einer Stelle 16' fährt das Schiff 14' in den Radarschattenbereich 64, und die Route 70 wird für den zugehörigen Track 45' aktiv (gestrichelter Teil des Trackverlaufs 16).

In diesem Beispiel sind die Aktionen "Position anpassen" und "Lateralen Abstand beibehalten" eingeschaltet, und daher wird die laterale Entfernung 17 zwischen der Kurve 72 und dem Track 45' an der Stelle 16' ermittelt, und der Track 45' wird durch den MST 32 entlang der Kurve 72 weiterbewegt, wobei die anfangs ermittelte laterale Entfernung 17 - bevorzugt durch eine Regelung - konstant gehalten (d.h. weitgehend beibehalten) wird, so dass der Track 45' beim Austritt des zugehörigen Schiffs 14' aus dem Radarschattenbereich am Punkt 16" eine laterale Entfernung 17' hat, die im Wesentlichen der anfänglichen lateralen Entfernung 17 entspricht. An den Eckpunkten 72' und 72", bei denen die Route 70 aktiv ist, erfolgt ein leichtes Überschwingen des Trackverlaufs 16, da aus der Beeinflussung des Zustands des Tracks durch Pseudo-Positionsmesswerte zu diskreten vorgegebenen Zeitpunkten eine gewisse Trägheit resultiert. Sofern also von einem konstanten lateralen Abstand 17 gesprochen wird, ist es für den Fachmann selbstverständlich, dass nicht eine mathematisch perfekte Konstanz gemeint ist, sondern eine Konstanz im Rahmen der Möglichkeiten des Systems.

**Fig. 6** zeigt den Trackverlauf 16 zu einem Track 45' für ein sich durch einen Radarschattenbereich 64 gemäß Fig. 5 bewegendes Schiff 14', wobei das Aktivitätskriterium "Keine aktuellen Messdaten vorhanden" eingeschaltet ist. An einer Stelle 16' fährt das Schiff 14' in den Radarschattenbereich 64, und die Route 70 wird für den zugehörigen Track 45' aktiv (gestrichelter Teil der Spur 16).

Im Gegensatz zur Fig. 5 ist nur die Aktion "Position anpassen" eingeschaltet, nicht jedoch die Aktion "Lateralen Abstand beibehalten". Daher bleibt in Abhängigkeit von der Implementierung die laterale Entfernung 17 des Tracks 45' beim Eintritt des Schiffs 14' in den Radarschattenbereich 64 während der Zeit der Aktivität der Route 70 nicht unbedingt konstant. Wie am Eckpunkt 72 zu sehen ist, wird der Trackverlauf 16 des Tracks 45' bzw. dessen Geschwindigkeit entsprechend der Richtung der Kurve 72 angepasst, die laterale Entfernung ändert sich jedoch dabei und wird kleiner. Sofern sich das reale Boot 14' also z.B. weiterhin auf der rechten Seite der Fahrstraße befindet und damit an der Stelle 16" eine größere laterale Entfernung hat, erfolgt dort zur Anpassung des Tracks 45' an die neuen Messwerte ein je nach Reaktion des MST 32 mehr oder weniger deutlicher Sprung des Tracks nach rechts (gesehen in Fahrtrichtung).

### Route - Anwendungsbeispiele

Routen sind insbesondere dann nützlich, wenn Gebiete vorliegen, für die generell keine Radar-Sensordaten vorliegen (z.B. der Radarschattenbereich links von der Insel 13 in Fig. 1 oder der Radarschattenbereich 64 in Fig. 2) oder aber nur für bestimmte, z.B. sehr große Schiffe Sensordaten ermittelt werden (z.B. unterhalb einer auf einer Anhöhe angeordneten Radarvorrichtung).

Die Verwendung der Routen zur Unterstützung der Verfolgung von Objekten hat in Versuchen zu guten Ergebnissen geführt. In Abhängigkeit von der realen Situation können die Routenparameter optimiert werden, z.B. durch statistische Auswertungen des Schiffsverkehrs. Die weitgehend frei konfigurierbaren Routenparameter ermöglichen es, auch auf besondere Situationen einzugehen. Wenn es z.B. Probleme gibt, dass Schiffe 14' auf einer bestimmten Route wegen fehlender Messdaten zu früh von der Verfolgung bzw. aus dem MST 32 entfernt werden, kann dem über die Routenparameter "Mindestlebensdauer" bzw. "Mindestlebensstrecke" entgegengewirkt werden.

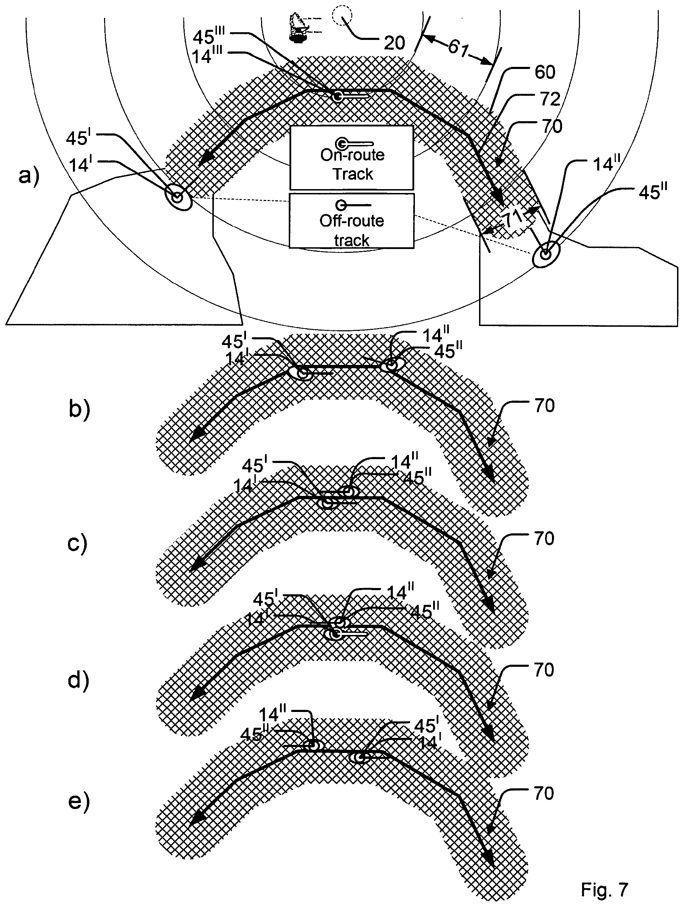

**Fig. 7a** bis **Fig. 7e** zeigen einen Anwendungsfall für Routen bei nah aneinander liegenden Schifffahrtsstraßen in entgegengesetzten Richtungen. In Fig. 7a ist ein Schiff 14' dabei, den Kanal 60 von links nach rechts zu durchfahren, und ein Schiff 14" von rechts nach links. Ein Schiff 14''' durchquert den Kanal 60 von links nach rechts und befindet sich in der Mitte des Kanals. Entsprechende Tracks 45' bis 45'" sind ebenfalls dargestellt. In den Fig. 7b bis 7e sind nur die Routen 70, die Schiffe 14', 14" und die zugehörigen Tracks 45', 45" dargestellt.

Sofern bei der Route 70 der Routenparameter "Keine aktuellen Messdaten vorhanden" gesetzt ist, ist die Route 70 nicht aktiv, da alle Schiffe 14 von dem Radar 20 erfasst werden können.

Das Gleiche gilt bei Fig. 7b und 7c, bei denen die Schiffe 14' und 14" aufeinander zufahren und dabei vom Radar 20 unterscheidbar sind.

In Fig. 7d ist das Schiff 14' jedoch vom Radar 20 aus gesehen durch das Schiff 14" verdeckt, so dass bei der aktuellen Messung für den zugehörigen Track 45" keine Messdaten erzeugt werden. Da der Routenparameter "Keine aktuellen Messdaten vorhanden" gesetzt ist, wird die bidirektionale Route 70 aktiv, und der Zustand des Schiffs 14' kann durch die Aktion "Position anpassen" entlang der Route 70 weiterbewegt werden.

In Fig. 7e sind die beiden Schiffe 14', 14" wieder unterscheidbar.

Sofern auf einer solchen Wasserstraße 60 ein sehr dichter Schiffsverkehr auftritt, kann es vorteilhaft sein, den Routenparameter "Keine aktuellen Messdaten vorhanden" zu deaktivieren, so dass sämtliche Schiffe 14 unabhängig von den Messdaten entlang der Route 70 geführt werden.

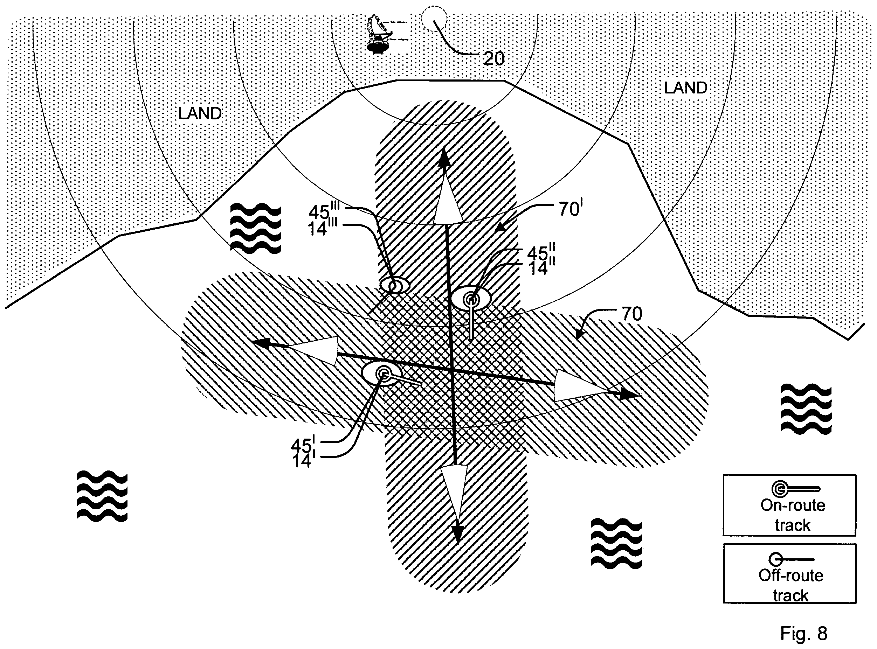

**Fig. 8** zeigt einen Anwendungsfall bei zwei sich kreuzenden Wasserstraßen. Für die erste Wasserstraße (links-rechts) ist eine Route 70 definiert und für die zweite Wasserstraße (oben-unten) eine Route 70'. Ein erstes Schiff 14' befindet sich auf der Route 70, ein zweites Schiff 14" auf der Route 70', und ein drittes Schiff 14''' befindet sich auf keiner der Routen. Die Schiffe 14' bis 14''' sind durch deren Radarecho dargestellt. In einem solchen Kreuzungsbereich gibt es beim Tracking häufig Schwierigkeiten, da Schiffe mit sehr unterschiedlichen Geschwindigkeitsrichtungen nah aneinander vorbeifahren. Dies kann z.B. zu einem Umspringen des Tracks auf ein anderes Schiff führen. Der Einsatz der Routen kann hier z.B. mit dem Kriterium "Keine aktuellen Messdaten vorhanden" erfolgen, und es kann die Aktion "Position anpassen" verwendet werden. Alternativ können die Routen kurz gewählt und für alle Tracks 45 (deaktiviertes "Keine aktuellen Messdaten vorhanden") verwendet werden, da die mit Hilfe der Routen bestimmte Bewegung über kurze Strecken im Normalfall gut mit der Realität übereinstimmt.

Durch die richtige Anwendung von Routen kann wie in den Ausführungsbeispielen gezeigt die Qualität der Tracks und somit die Qualität der Verfolgung der Objekte deutlich verbessert werden, und die Tracks sind zuverlässiger als bei einer Verfolgung ohne Routen. Die Tracks stimmen somit besser mit den realen Objekten überein, und dies erhöht auch die Qualität des MST 32 insgesamt. Durch die Verwendung von Routen wird auch das Tracking insgesamt unterstützt, was insbesondere bei großen Anwendungen die benötigte Rechenleistung verringern kann.

Die Verwendung von Routen ist auf Grund der ggf. großen Ausdehnung des beobachteten Gebiets, verbunden mit der meistens unvollständigen Sensorabdeckung des Gebiets insbesondere für die Verfolgung von Schiffen und außerdem auch für die Verfolgung von Landfahrzeugen geeignet.

Insbesondere bei großen Gebieten mit vielen Objekten, wie es z.B. bei der Küstenüberwachung eines ganzen Landes der Fall ist, ist ein eingerichteter MST 32 mit auf die lokalen Gegebenheiten gut abgestimmten Routen 70 wesentlich genauer und besser als ein MST 32 ohne solche Routen. Dabei können in einem großen System z.B. mehrere hundert Routen 70 erforderlich sein.

Naturgemäß sind im Rahmen der vorliegenden Erfindung vielfache weitere Abwandlungen und Modifikationen möglich.

## Patentansprüche

1. Verfahren zur Verfolgung mindestens eines sich bewegenden Objekts (14) mittels mindestens einer Sensorvorrichtung (20, 21), die dazu ausgebildet ist, Messdaten (24) über dieses mindestens eine Objekt (14) zu generieren, und mit Routenparametern (42) für mindestens eine vorgegebene Route (70),
welche Routenparameter (42) eine ortsfeste Kurve (72) aufweisen, welches Verfahren die folgenden Schritte aufweist:
A) in Abhängigkeit von den Messdaten (24) wird für das Objekt (14) ein Track (45) als Abbild des Objekts (14) erzeugt und fortlaufend aktualisiert,
B) in Abhängigkeit vom Zustand des Tracks (45) und den Routenparametern (42) wird auf Grund mindestens eines vorgegebenen Kriteriums bestimmt, ob eine Route (70) für den betreffenden Track (45) aktiv ist;
C) wenn eine Route (70) für den Track (45) aktiv ist, wird der Zustand des Tracks (45) in Abhängigkeit von den Routenparametern (42) beeinflusst, wobei der Zustand des Tracks (45) derart beeinflusst wird, dass sich der Track (45) entlang der Kurve (72) bewegt.

2. Verfahren nach Anspruch 1, bei welchem bei der Bestimmung, ob eine Route (70) für einen Track (45) aktiv ist, mehrere Kriterien vorgegeben sind, und bei welchem eine Route (70) für den Track (45) nur aktiv ist, wenn alle vorgegebenen Kriterien erfüllt sind.

3. Verfahren nach Anspruch 1 oder 2, bei welchem die ortsfeste Kurve (72) einer absolut festgelegten, möglichen Fahrbahn des Objekts (14) entspricht.

4. Verfahren nach einem der vorhergehenden Ansprüche, bei welchem die Kurve (72) als Polygon definiert wird.

5. Verfahren nach Anspruch 3 oder 4, bei welchem die Routenparameter (42) eine der Kurve zugeordnete Breite (71) aufweisen,
wobei die Breite (71) konstant oder abhängig von der Kurvenposition ist.

6. Verfahren nach einem der vorhergehenden Ansprüche, bei welchem der Kurve (72) eine Richtung zugeordnet wird.

7. Verfahren nach einem der vorhergehenden Ansprüche, bei welchem die Kurve (72) als bidirektional definiert wird.

8. Verfahren nach einem der vorhergehenden Ansprüche, bei welchem bei der Bestimmung, ob eine Route (70) für einen Track (45) aktiv ist, geprüft wird, ob sich der Track (45) auf der Kurve (72, 71) befindet.

9. Verfahren nach einem der vorhergehenden Ansprüche, bei welchem bei der Bestimmung, ob eine Route (70) für einen Track (45) aktiv ist, geprüft wird, ob die Winkelabweichung (77) zwischen der Bewegungsrichtung des Tracks (45) und der Richtung der Route (70) an der Position des Tracks (45) innerhalb eines vorgegebenen Höchst-Winkelabweichungsbereichs (74) ist.

10. Verfahren nach Anspruch 9, bei welchem die Routenparameter (42) für die Route (70) den Höchst-Winkelabweichungsbereich (74) aufweisen.

11. Verfahren nach einem der vorhergehenden Ansprüche, bei welchem die Genauigkeit für die Beeinflussung des Zustands des Tracks (45) einstellbar ist.

12. Verfahren nach einem der vorhergehenden Ansprüche, bei welchem der Zustand des Tracks (45) dadurch beeinflusst wird, dass geeignete Pseudo-Messdaten generiert werden, um die gewünschte Bewegung des Tracks (45) zu erzeugen.

13. Verfahren nach Anspruch 12, bei welchem die Pseudo-Messdaten Pseudo-Positionsdaten aufweisen.

14. Verfahren nach Anspruch 12 oder 13, bei welchem die Pseudo-Messdaten Pseudo-Geschwindigkeitsdaten für einen Track (45) aufweisen.

15. Verfahren nach einem der vorhergehenden Ansprüche, bei welchem die Routenparameter (42) für die mindestens eine Route (70) eine Breite aufweisen, und bei welchem dann, wenn eine Route (70) für einen Track (45) aktiv ist, der Zustand des Tracks (45) derart beeinflusst wird, dass der laterale Abstand (17) des Tracks (45) bezüglich der Kurve (72) konstant bleibt.

16. Verfahren nach einem der vorhergehenden Ansprüche, bei welchem die Routenparameter (42) für die Route (70) einen Minimalgeschwindigkeitswert aufweisen, und bei welchem bei der Bestimmung, ob eine Route (70) für einen Track (45) aktiv ist, geprüft wird, ob der Track (45) einen Geschwindigkeitswert hat, welcher mindestens so groß wie der Minimalgeschwindigkeitswert ist.

17. Verfahren nach einem der vorhergehenden Ansprüche, bei welchem die Routenparameter (42) für die Route (70) einen Maximalgeschwindigkeitswert aufweisen, und bei welchem bei der Bestimmung, ob eine Route (70) für einen Track (45) aktiv ist, geprüft wird, ob der Track (45) einen Geschwindigkeitswert hat, welcher höchstens so groß wie der Maximalgeschwindigkeitswert ist.

18. Verfahren nach einem der vorhergehenden Ansprüche, bei welchem bei der Bestimmung, ob eine Route (70) für einen Track (45) aktiv ist, geprüft wird, ob keine aktuellen Messdaten (24) für den Track (45) vorliegen.

19. Verfahren nach einem der vorhergehenden Ansprüche, bei welchem die Routenparameter (42) für die mindestens eine Route (70) einen Geschwindigkeitsbetragswert aufweisen, und bei welchem dann, wenn eine Route (70) für einen Track (45) aktiv ist, der Zustand des Tracks (45) derart beeinflusst wird, dass der Betrag der Geschwindigkeit des Tracks (45) dem Geschwindigkeitsbetragswert der Route (70) entspricht.

20. Verfahren nach einem der vorhergehenden Ansprüche, bei welchem dem mindestens einen Track (45) eine vorgegebene Lebensdauer zugeordnet ist, und bei welchem der Track (45) entfernt wird, wenn die Zeitdauer seit dem Vorliegen des letzten Messwerts für den Track (45) größer als die vorgegebene Lebensdauer wird.

21. Verfahren nach Anspruch 20, bei welchem die Routenparameter (42) für die mindestens eine Route (70) eine Routen-Mindestlebensdauer aufweisen, und bei welchem dann, wenn eine Route (70) für einen Track (45) aktiv ist, die Lebensdauer des Tracks (45) auf die Routen-Mindestlebensdauer vergrößert wird, wenn sie zuvor geringer war.

22. Verfahren nach einem der Ansprüche 20 oder 21, bei welchem die Routenparameter (42) für die mindestens eine Route (70) eine Routen-Mindestlebensstrecke aufweisen, und bei welchem dann, wenn eine Route (70) für einen Track (45) aktiv ist, der Track (45) auch beim Ablauf der Lebensdauer erst dann entfernt wird, wenn die zurückgelegte Strecke des Tracks (45) seit dem Beginn der Aktivität der Route (70) größer als die Routen-Mindestlebensstrecke wird.

23. Verfahren nach einem der vorhergehenden Ansprüche, bei welchem für den Fall, dass bei der Bestimmung, ob eine Route (70) für einen Track (45) aktiv ist, mehrere mögliche Routen für den Track (45) zur Verfügung stehen, nur eine geeignete Route (70) ausgewählt wird.

24. Verfahren nach einem der vorhergehenden Ansprüche, mit mindestens einer Anzeigevorrichtung (52) zur Darstellung eines Bereichs des von der Sensorvorrichtung (20, 21) erfassten Raums, bei welchem Verfahren ein Track (45), welcher sich in dem Bereich befindet, graphisch dargestellt wird.

25. Verfahren nach einem der vorhergehenden Ansprüche, bei welchem das Objekt (14) ein Schiff ist.

26. Vorrichtung (32) zur Verfolgung mindestens eines sich bewegenden Objekts (14), welche aufweist:
Mindestens einen Rechner (32),
mindestens einen Speicher (42) zur Speicherung von Routenparametern (42) für mindestens eine vorgegebene Route (70),
mindestens eine Eingabeschnittstelle (32), um Messdaten (24) über das mindestens eine sich bewegende Objekt (14) von mindestens einer Sensorvorrichtung (20, 21) zu empfangen,
welche Vorrichtung dazu ausgebildet ist, ein Verfahren nach einem der Ansprüche 1 bis 25 auszuführen.

## Claims

1. Method for tracking at least one moving object (14) by means of at least one sensor apparatus (20, 21) that is designed to generate measurement data (24) relating to said at least one object (14), and using route parameters (42) for at least one predetermined route (70), which route parameters (42) comprise a stationary curve (72), which method comprises the following steps:
A) generating and continuously updating a track (45) for the object (14) as an image of the object (14) according to the measurement data (24);
B) according to the state of the track (45) and the route parameters (42), determining whether a route (70) is active for the track (45) in question on the basis of at least one predetermined criterion;
C) if a route (70) is active for the track (45), influencing the state of the track (45) according to the route parameters (42), wherein the state of the track (45) is influenced such that the track (45) moves along the curve (72).

2. Method according to claim 1, wherein a plurality of criteria are predetermined for determining whether a route (70) is active for a track (45), and wherein a route (70) is only active for the track (45) if all the predetermined criteria are met.

3. Method according to either claim 1 or claim 2, wherein the stationary curve (72) corresponds to an absolute fixed, possible travel path of the object (14).

4. Method according to any of the preceding claims, wherein the curve (72) is defined as a polygon.

5. Method according to either claim 3 or claim 4, in which the route parameters (42) comprise a width (71) assigned to the curve, wherein the width (71) is constant or dependent on the curve position.

6. Method according to any of the preceding claims, wherein a direction is assigned to the curve (72).

7. Method according to any of the preceding claims, wherein the curve (72) is defined as bidirectional.

8. Method according to any of the preceding claims, wherein, when it is determined whether a route (70) is active for a track (45), it is checked whether the track (45) is on the curve (72, 71).

9. Method according to any of the preceding claims, wherein, when it is determined whether a route (70) is active for a track (45), it is checked whether the angular deviation (77) between the movement direction of the track (45) and the direction of the route (70) at the position of the track (45) is within a predetermined maximum angular deviation range (74).

10. Method according to claim 9, wherein the route parameters (42) for the route (70) comprise the maximum angular deviation range (74).

11. Method according to any of the preceding claims, wherein the precision of the influence on the state of the track (45) can be adjusted.

12. Method according to any of the preceding claims, wherein the state of the track (45) is influenced by suitable pseudo measurement data being generated in order to produce the desired movement of the track (45).

13. Method according to claim 12, wherein the pseudo measurement data comprise pseudo position data.

14. Method according to either claim 12 or claim 13, wherein the pseudo measurement data comprise pseudo speed data for a track (45).

15. Method according to any of the preceding claims, wherein the route parameters (42) for the at least one route (70) comprise a width, and wherein, if a route (70) is active for a track (45), the state of the track (45) is influenced such that the lateral distance (17) between the track (45) and the curve (72) remains constant.

16. Method according to any of the preceding claims, wherein the route parameters (42) for the route (70) comprise a minimum speed value, and wherein, when it is determined whether a route (70) is active for a track (45), it is checked whether the track (45) has a speed value that is at least equal to the minimum speed value.

17. Method according to any of the preceding claims, wherein the route parameters (42) for the route (70) comprise a maximum speed value, and wherein, when it is determined whether a route (70) is active for a track (45), it is checked whether the track (45) has a speed value that is at most equal to the maximum speed value.

18. Method according to any of the preceding claims, wherein, when it is determined whether a route (70) is active for a track (45), it is checked whether no current measurement data (24) are available for the track (45).

19. Method according to any of the preceding claims, wherein the route parameters (42) for the at least one route (70) comprise a speed magnitude value, and wherein, if a route (70) is active for a track (45), the state of the track (45) is influenced such that the magnitude of the speed of the track (45) corresponds to the speed magnitude value of the route (70).

20. Method according to any of the preceding claims, wherein a predetermined life time is assigned to the at least one track (45), and wherein the track (45) is removed if the duration since the last measurement value for the track (45) was available exceeds the predetermined life time.

21. Method according to claim 20, wherein the route parameters (42) for the at least one route (70) comprise a route minimum life time, and wherein, if a route (70) is active for a track (45), the life time of the track (45) is increased to the route minimum life time if said life time of the track was previously lower.

22. Method according to either claim 20 or claim 21, wherein the route parameters (42) for the at least one route (70) comprise a route minimum life distance, and wherein, if a route (70) is active for a track (45), the track (45) is only removed once the life time has elapsed if the distance covered by the track (45) since the start of the active state of the route (70) exceeds the route minimum life distance.

23. Method according to any of the preceding claims, wherein, if a plurality of possible routes are available for a track (45) when it is determined whether a route (70) is active for the track (45), only one suitable route (70) is selected.

24. Method according to any of the preceding claims, using at least one display apparatus (52) for displaying a region of the space recorded by the sensor apparatus (20, 21), in which method a track (45) located in the region is displayed graphically.

25. Method according to any of the preceding claims, wherein the object (14) is a ship.

26. Apparatus (32) for tracking at least one moving object (14), which apparatus comprises:
at least one computer (32),
at least one memory (42) for storing route parameters (42) for at least one predetermined route (70),
at least one input interface (32) in order to receive measurement data (24) relating to the at least one moving object (14) from at least one sensor apparatus (20, 21),
which apparatus is designed to carry out a method according to any of claims 1 to 25.

## Revendications

1. Procédé pour suivre au moins un objet (14) en déplacement au moyen d'au moins un dispositif capteur (20, 21) qui est réalisé pour générer des données de mesure (24) sur ledit au moins un objet (14), et avec des paramètres d'itinéraire (42) pour au moins un itinéraire (70) prédéfini, lesquels paramètres d'itinéraire (42) présentent une courbe fixe (72), lequel procédé présente les étapes suivantes :
A) en fonction des données de mesure (24), une trace (45) est générée pour l'objet (14) comme représentation de l'objet (14) et actualisée en continu,
B) en fonction de l'état de la trace (45) et des paramètres d'itinéraire (42), on détermine, sur la base d'au moins un critère prédéterminé, si un itinéraire (70) est actif pour la trace (45) concernée ;
C) si un itinéraire (70) est actif pour la trace (45), l'état de la trace (45) est influencé en fonction des paramètres d'itinéraire (42), l'état de la trace (45) étant influencé de manière que la trace (45) se déplace le long de la courbe (72).

2. Procédé selon la revendication 1, dans lequel, lors de la détermination si un itinéraire (70) est actif pour une trace (45), plusieurs critères sont prédéfinis, et dans lequel un itinéraire (70) est actif pour la trace (45) seulement si tous les critères prédéfinis sont remplis.

3. Procédé selon la revendication 1 ou 2, dans lequel la courbe fixe (72) correspond à une voie de circulation possible, définie de manière absolue, de l'objet (14).

4. Procédé selon l'une des revendications précédentes, dans lequel la courbe (72) est définie comme un polygone.

5. Procédé selon la revendication 3 ou 4, dans lequel les paramètres d'itinéraire (42) présentent une largeur (71) associée à la courbe,
la largeur (71) étant constante ou dépendante de la position sur la courbe.

6. Procédé selon l'une des revendications précédentes, dans lequel une direction est associée à la courbe (72).

7. Procédé selon l'une des revendications précédentes, dans lequel la courbe (72) est définie comme bidirectionnelle.

8. Procédé selon l'une des revendications précédentes, dans lequel, lors de la détermination si un itinéraire (70) est actif pour une trace (45), on contrôle si la trace (45) se trouve sur la courbe (72, 71).

9. Procédé selon l'une des revendications précédentes, dans lequel, lors de la détermination si un itinéraire (70) est actif pour une trace (45), on contrôle si l'écart angulaire (77) entre la direction de déplacement de la trace (45) et la direction de l'itinéraire (70) à la position de la trace (45) se trouve à l'intérieur d'une plage d'écart angulaire maximal (74) prédéfinie.

10. Procédé selon la revendication 9, dans lequel les paramètres d'itinéraire (42) pour l'itinéraire (70) présentent la plage d'écart angulaire maximal (74).

11. Procédé selon l'une des revendications précédentes, dans lequel la précision de l'influence exercée sur l'état de la trace (45) est réglable.

12. Procédé selon l'une des revendications précédentes, dans lequel l'état de la trace (45) est influencé en générant des pseudo-données de mesure appropriées pour produire le déplacement souhaité de la trace (45).

13. Procédé selon la revendication 12, dans lequel les pseudo-données de mesure présentent des pseudo-données de position.

14. Procédé selon la revendication 12 ou 13, dans lequel les pseudo-données de mesure présentent des pseudo-données de vitesse pour une trace (45).

15. Procédé selon l'une des revendications précédentes, dans lequel les paramètres d'itinéraire (42) pour ledit au moins un itinéraire (70) présentent une largeur, et dans lequel, lorsqu'un itinéraire (70) est actif pour une trace (45), l'état de la trace (45) est influencé de manière que la distance latérale (17) de la trace (45) par rapport à la courbe (72) reste constante.

16. Procédé selon l'une des revendications précédentes, dans lequel les paramètres d'itinéraire (42) pour l'itinéraire (70) présentent une valeur de vitesse minimale, et dans lequel, lors de la détermination si un itinéraire (70) est actif pour une trace (45), on contrôle si la trace (45) a une valeur de vitesse qui est au moins aussi grande que la valeur de vitesse minimale.

17. Procédé selon l'une des revendications précédentes, dans lequel les paramètres d'itinéraire (42) pour l'itinéraire (70) présentent une valeur de vitesse maximale, et dans lequel, lors de la détermination si un itinéraire (70) est actif pour une trace (45), on contrôle si la trace (45) a une valeur de vitesse qui est au plus aussi grande que la valeur de vitesse maximale.

18. Procédé selon l'une des revendications précédentes, dans lequel lors de la détermination si un itinéraire (70) est actif pour une trace (45), on contrôle s'il n'existe pas de données de mesure (24) actuelles pour la trace (45).

19. Procédé selon l'une des revendications précédentes, dans lequel les paramètres d'itinéraire (42) pour ledit au moins un itinéraire (70) présentent une valeur de norme de vitesse, et dans lequel, lorsqu'un itinéraire (70) est actif pour une trace (45), l'état de la trace (45) est influencé de manière que la norme de vitesse de la trace (45) corresponde à la valeur de norme de vitesse de l'itinéraire (70).

20. Procédé selon l'une des revendications précédentes, dans lequel une durée de vie prédéfinie est associée à ladite au moins une trace (45), et dans lequel la trace (45) est supprimée lorsque la durée depuis la présence de la dernière valeur de mesure pour la trace (45) est supérieure à la durée de vie prédéfinie.

21. Procédé selon la revendication 20, dans lequel les paramètres d'itinéraire (42) pour ledit au moins un itinéraire (70) présentent une durée de vie minimale d'itinéraire, et dans lequel, lorsqu'un itinéraire (70) est actif pour une trace (45), la durée de vie de la trace (45) est augmentée à la durée de vie minimale d'itinéraire si elle était auparavant plus faible.

22. Procédé selon l'une des revendications 20 ou 21, dans lequel les paramètres d'itinéraire (42) pour ledit au moins un itinéraire (70) présentent un trajet de vie minimal d'itinéraire, et dans lequel, lorsqu'un itinéraire (70) est actif pour une trace (45), la trace (45) n'est supprimée, même à l'expiration de la durée de vie, que si le trajet parcouru par la trace (45) depuis le début de l'activité de l'itinéraire (70) est plus grand que le trajet de vie minimal d'itinéraire.

23. Procédé selon l'une des revendications précédentes, dans lequel, dans le cas où, lors de la détermination si un itinéraire (70) est actif pour une trace (45), plusieurs itinéraires possibles sont disponibles pour la trace (45), un seul itinéraire (70) approprié est sélectionné.

24. Procédé selon l'une des revendications précédentes, avec au moins un dispositif d'affichage (52) pour représenter une zone de l'espace couvert par le dispositif capteur (20, 21), dans lequel procédé une trace (45) qui se trouve dans cette zone est représentée graphiquement.

25. Procédé selon l'une des revendications précédentes, dans lequel l'objet (14) est un navire.

26. Dispositif (32) pour suivre au moins un objet (14) en déplacement, lequel présente :
au moins un ordinateur (32),
au moins une mémoire (42) pour mémoriser des paramètres d'itinéraire (42) pour au moins un itinéraire (70) prédéfini,
au moins une interface d'entrée (32) pour recevoir des données de mesure (24) sur ledit au moins un objet (14) en déplacement d'au moins un dispositif capteur (20, 21),
lequel dispositif est conçu pour mettre en oeuvre un procédé selon l'une des revendications 1 à 25.
